# EUROPEAN PATENT APPLICATION

(11) **EP 0 937 920 A1**
(43) Date of publication of application: **25.08.1999**
(21) Application number: 98102824.4
(22) Date of filing: 18.02.1998
(51) Int. Cl.: F16J 1/16

(54) **Bearing arrangement for a piston pin**

(71) Applicant: YAMAHA HATSUDOKI KABUSHIKI KAISHA, Iwata-shi Shizuoka-ken, 438 (JP)
(72) Inventor: Suzuki, Takahiro, Iwata-Shi, Shizuoka-ken (JP); Yoshida, Takeo, Iwata-Shi, Shizuoka-ken (JP)
(74) Representative: Grünecker, Kinkeldey, Stockmair & Schwanhäusser Anwaltssozietät

(57) **Abstract**

A bearing arrangement for a piston pin of a piston in an internal combustion engine, especially a two-cycle engine or crank chamber supercharging four-cycle engine has one or more grooves adapted for communicating an interior of a crankcase with a hollow interior of the piston pin. The grooves are formed on at least one of an outer peripheral surface of the piston pin and an inner peripheral surface of a pin boss defining a pin-bearing hole at a portion where the piston pin is brought into sliding contact with the pin boss. The groove may also be provided on bearing surfaces between the piston pin and a connecting rod. Furthermore, a lubricating system including said bearing arrangement is disclosed which uses the aspiration between the interior of the piston pin and a crankcase chamber for directing lubricant to sliding surfaces of said bearing arrangement.

## Description

The present invention relates to a bearing arrangement for a piston pin of a piston in an internal combustion engine. Moreover, the invention relates to a lubricating system for an internal combustion engine, in particular two-cycle engines or crankchamber supercharging four-cycle engines.

In conventional two-cycle engines in which an intake passage is connected to a crank case and an interior of the crank case is communicated with a combustion chamber through a scavenging passage, a lubricating oil is pumped from an oil tank through an oil filter by the operation of an oil pump, and distributed into two oil paths formed on cylinder block side and on crank case side. The lubricating oil entering the cylinder block side oil path is further fed into a cylinder bore to lubricate sliding contact portions between an inner peripheral surface of the cylinder block defining a cylinder bore and a piston. On the other hand, the lubricating oil entering the crankcase side oil path is further fed through an oil passage formed in a crank shaft to a bearing for connecting the crank shaft with a large end of the connecting rod. Further, the lubricating oil discharged from the sliding contact portions of the pistol, and from the bearing for the large end of the connecting rod is scattered toward a lower surface of the piston by the rotation of the crank shaft, thereby causing the lubricating oil to reach and lubricate a bearing portion of a piston pin at the lower side of the piston.

Alternatively, in the conventional two-cycle engines, the lubricating oil pumped from the oil tank through the oil filter by the operation of the oil pump, is distributed into the intake passage where the lubricating oil is mixed with a fresh intake air, and then introduced into the crank case. A part of the lubricating oil temporarily received in the crank case together with the fresh intake air is fed to the bearing for the large end of the connecting rod and the coupling portion between the piston and the connecting rod to lubricate these portions. The remaining part of the lubricating oil is further conveyed by the flow of fresh intake air and fed into the cylinder bore on the combustion chamber side to lubricate the sliding contact portion of the piston.

Meanwhile, in the above-mentioned lubricating structure used in the conventional two-cycle engines, only an extremely small part of the lubricating oil which is fed through the intake passage into the crank case and scattered around by the rotation of the crank shaft, contributes to lubrication of the coupling portion between, the piston and the connecting rod, i.e. the piston pin. For this reason, to ensure the lubrication of such a portion, it is necessary to introduce a large amount of the lubricating oil into the crankcase.

However, unlike ordinary four-cycle engines having a crank case in the form of a closed chamber by fitting an oil pan to a lower portion thereof, when a large amount of lubricating oil is introduced into the crank case of such a two-cycle engine or crank chamber supercharging four-cycle engine, a majority of the lubricating oil thus introduced is caused to pass through the crank case without contributing to the lubrication therein and delivered together with a fresh intake air into the combustion chamber through the scavenging passage (supercharging passage in the case of the crank chamber supercharging four-cycle engines). As a result, there arise such problems that a large amount of white smoke is discharged in atmospheric air when the lubricating oil is burned with fuel in the combustion chamber, or a large amount of unburned oil is discharged together with a scavenging air flow passing through the combustion chamber, thereby causing not only atmospheric pollution but also increase in amount of the lubricating oil consumed or wasted.

Accordingly, the present invention has been made to overcome the above-mentioned problems encountered in the prior arts.

It is an object of the present invention to provide a bearing arrangement for the piston pin which only requires a small amount of lubricating oil. Moreover, the invention intends to propose a lubricating system for an internal combustion engine which is capable of effectively directing lubricating oil in a crankcase to a coupling portion between a piston and a connecting rod, thereby not only enabling satisfactory lubrication thereof without introducing a large amount of the lubricating oil into the crank case but also reducing the amount of the lubricating oil consumed or wasted and avoiding atmospheric pollution.

To accomplish these objects, in a first aspect of the present invention, there is provided a bearing arrangement for a piston pin of a piston of an internal combustion engine, said bearing arrangement comprising a hollow piston pin and a pin bearing hole provided on the piston or a connecting rod, for engagement with said piston pin, said piston pin and said pin bearing hole each having a bearing surface for sliding contact with each other, wherein at least one opening is provided in the piston pin for communicating the interior of the piston pin with its bearing surface, and wherein at least one groove is provided on at least one of said bearing surfaces which groove connects said opening with the outer surrounding to allow aspiration between the hollow interior of the piston pin with the outer surrounding.

Accordingly, lubricating oil or an oil mist may flow along the grooves and thereby pass the bearing surfaces between the piston pin and a corresponding bearing hole. Thus, good lubrication can be attained even if only a small amount of lubricating oil is supplied. This bearing arrangement can be applied between the piston pin and the piston as well as between the piston pin and a connecting rod.

According to a preferred embodiment, the grooves are inclined with respect to a longitudinal axis of the piston pin. Because of their increased length even better distribution of lubricant between the bearing surfaces can be achieved. Alternatively, the number of grooves may be reduced.

The afore-mentioned problem is also solved by a lubricating system for an internal combustion engine comprising said bearing arrangement, There, the interior of the piston pin communicates with the crankcase chamber via the openings of the piston pin and said grooves. As their cross-sectional area is relatively small the pressure inside the piston pin will follow the pressure in the crankcase chamber delayed. Accordingly, under operation of the engine there will always be a certain difference in pressure between the interior of the piston pin and the outer surrounding, i.e. the crankcase chamber. This pressure difference causes lubricating oil or oil mist to constantly flow in the one or the other direction through said opening and grooves, thereby providing good lubrication between the piston pin and pin bearing hole.

The above-mentioned problem is solved by a lubricating system for an internal combustion engine including a cylinder block defining a cylinder bore, a crankcase integrally connected with the cylinder block, a piston slidably fitted into the cylinder bore and having a pair of pin bearing holes formed on a lower surface side thereof, a cylindrical piston pin supported at opposite ends thereof in the pin bearing hole, a crankshaft rotatably supported in the crankcase, and a connecting rod coupled at one end thereof with a central portion of the piston pin through a bearing and at the other end thereof with the crankshaft for ensuring an associated operation between the piston and the crankshaft, wherein the piston pin is formed with one or more through- holes at a portion where the piston pin is brought into sliding contact with the small end of the connecting rod through the bearing to communicate inner and outer peripheral surfaces of the piston pin with each other.

In the following, the present invention is explained in greater detail with respect to several embodiments thereof in conjunction with the accompanying drawings, wherein:
Fig. 1 is a cross-sectional view of a single cylinder two-cycle engine to which an engine lubricating structure according to a first preferred embodiment of the present invention is applied.
Fig. 2 is an enlarged cross-sectional view of a coupling portion between a piston pin and a connecting rod of the two-cycle engine shown in Fig. 1.
Fig. 3 is a front elevational view of a piston pin used in the lubricating structure according to the first preferred embodiment of the present invention.
Fig. 4 is a development view of an outer peripheral surface of the piston pin shown in Fig. 3.
Fig. 5 is a cross-sectional view of the piston pin, taken along line A-A of Fig. 4.
Fig. 6 is a graph for explaining the difference in pressure between interiors of piston pin and crank case of an engine to which the lubricating structure according to the present invention is applied, in response to reciprocating movement of the piston.
Fig. 7 is a front view, partially in section, of a piston pin used in a lubricating structure according to a second preferred embodiment of the present invention.
Fig. 8 is a perspective view of a piston pin used in a lubricating structure according to a third preferred embodiment of the present invention.
Fig. 9A is a cross-sectional view showing a pin-bearing hole configuration of a pin boss, taken along the axial direction of the pin-bearing hole, used in a lubricating structure according to a fourth preferred embodiment of the present invention.
Fig. 9B is a cross-sectional view taken along line B-B of Fig. 9A.
Fig. 10 is a cross-sectional view of a bearing portion between a small end of the connecting rod and the piston pin with respect to a lubricating structure according to a fifth preferred embodiment of the present invention.
Fig. 11 is a cross-sectional view of a crank chamber supercharging four-cycle engine to which the lubricating structure according to the present invention can also be applied.

The lubricating structures for an internal combustion engine according to preferred embodiments of the present invention will be described in detail below with reference to the drawings.

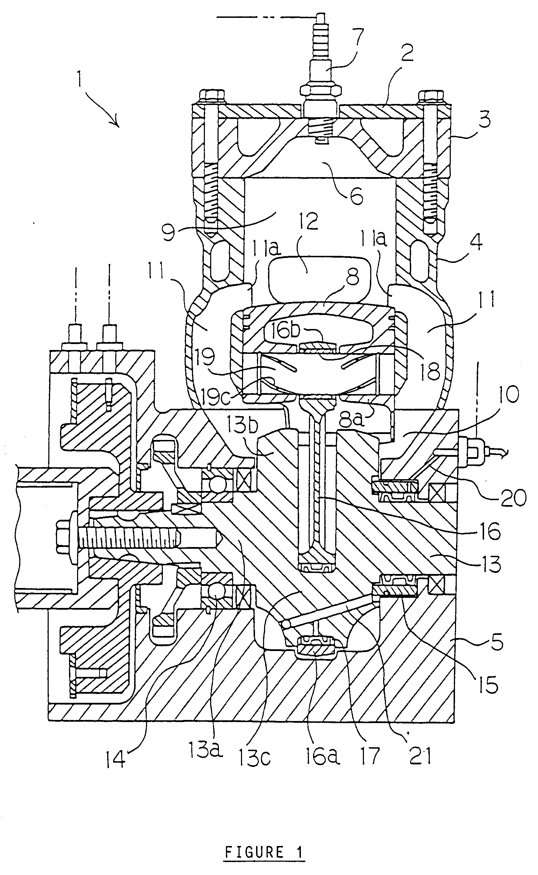

Referring to Fig. 1, a single cylinder two-cycle engine to which the lubricating structure according to one preferred embodiment of the present invention is applied, is shown in a vertical cross-section taken along the center axis of a crank shaft. In Fig. 1, the engine 1 includes a cylinder head cover 2, a cylinder head 3, a cylinder block 4 and a crank case 5 which are integrally coupled together. A lower surface of the cylinder head 3 is recessed to form a combustion chamber 6. An ignition plug 7 is fitted to the cylinder head such that an igniting portion thereof is located within the combustion chamber 6.

The cylinder block 4 is formed with a cylinder bore 9 into which a piston 8 is slidably fitted, a scavenging passage 11 communicating an interior of the crank case (crank chamber 10) with the combustion chamber side of the cylinder bore 6 (an upper side of the piston when the piston is located at a bottom dead center position) and having at one end thereof a scavenging port 11a opened into the cylinder bore 9, and an exhaust passage having at one end thereof an exhaust port 12 opened into the cylinder bore 9.

Within the crank case 5, i.e., in the crank chamber 10, a crank shaft 13 constituted by a main shaft 13a, a crank arm 13b and a crank pin 13c is supported through bearings 14 and 15 so as to be rotatable about an axis of the main shaft 13a. The cylinder block 4 is further formed with an intake passage (not shown) mounting a carburetor thereon, on the opposite side of the exhaust passage relative to an axis of the cylinder bore 9, i.e., on an upper side relative to a paper plane of Fig. 1 when it is viewed from above. The intake passage has, at one end thereof, an intake port opened into the crank chamber 10. At the same end of the intake passage where the intake port is located, a reed-type check valve is provided to prevent a reverse flow from the crank chamber 10.

In addition, the piston 8 slidably fitted into the cylinder bore 9 and the crank shaft 13 rotatably supported by the crank case are connected by a connecting rod so as to be operatively coupled with each other. The connecting rod 16 has a large end 16a rotatably fitted around the crank pin 13c of the crank shaft 13, and a small end 16b rotatably fitted around a piston pin 19 of the piston 8.

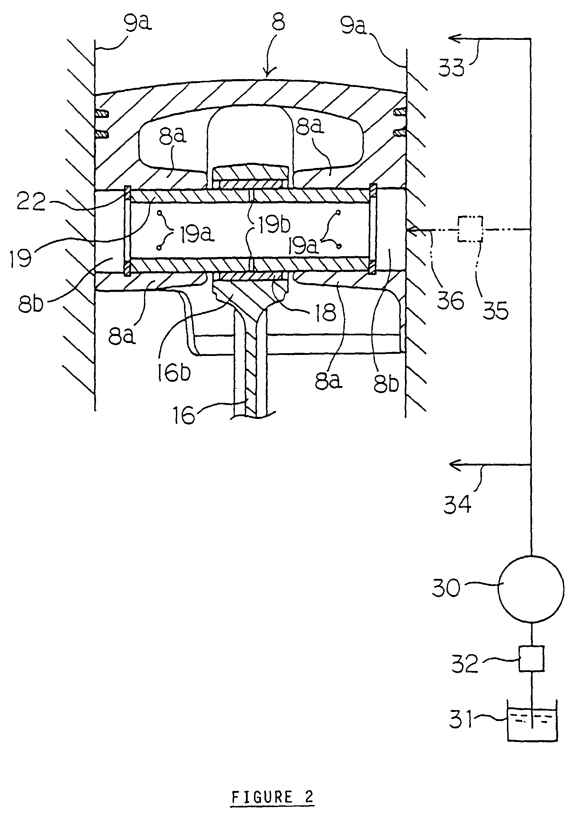

Referring to Fig. 2, there is shown a coupling portion between the piston 8 and the connecting rod 16. The piston 8 is formed, on a lower surface side thereof, with a pair of opposite pin bosses 8a defining pin-bearing holes 8b whose axes are horizontally aligned with each other. The piston pin 19 in the form of a hollow cylindrical body is inserted at opposite ends thereof into the pin-bearing holes 8b and supported therein so as to be rotatable relative to the piston 8. On an outer peripheral surface of a central portion of the piston pin 19, the small end 16b of the connecting rod 16 is rotatably fitted through the bearing 18 (in this embodiment, a needle bearing).

The piston pin 19 supported in the pin-bearing holes 8b of the pin bosses 8a is positioned by a pair of snap rings 19 to inhibit an axial movement thereof relative to the pin bosses 8a. An interior of the hollow cylindrical piston pin 19 extending through an axial center thereof and communicated with, the pin-bearing holes 8b, is closed outside the opposite open ends thereof by an inner peripheral surface (surface defining the pin-bearing hole 8b) of the pin bosses 8a and an inner peripheral surface 9a (surface defining the cylinder bore 9) of the cylinder block 4.

In the thus arranged two-cycle engine according to the preferred embodiment of the present invention, the lubricating oil is fed to the respective portions to be lubricated in the following manner. That is, as shown in Fig. 2, the lubricating oil pumped from an oil tank 31 through an oil filter 12 by the operation of an oil pump 30, is distributed into an oil path 33 on the cylinder block side, and then fed into the cylinder bore 9 trough a nozzle port (not shown) opened to the combustion chamber side of the inner peripheral surface 9a defining the cylinder bore 9. On the other hand, the lubricating oil is also distributed into an oil path 34 on the crank case side, and then fed through an oil passage 20 formed in the crank case, a crank shaft bearing 15 and an oil passage 21 formed in the crank shaft 13 to a bearing 17 for connecting the large end 16a of the connecting rod 16 to the crank shaft 13, as shown in Fig. 1.

The lubricating oil supplied through the oil path 33 on the cylinder block side into the cylinder bore 9 lubricates the sliding contact portions between the piston 8 and the inner peripheral surface 9a defining the cylinder bore 9, and then flows down into the crank case. On the other hand the lubricating oil supplied through the oil path 34 on the crank case side, lubricates the bearing 17 for the large end 16a of the connecting rod 16 and then flows out therefrom. The lubricating oil discharged from the respective portions is scattered toward the lower surface of the piston 8 to lubricate the coupling portion between the piston 8 and the connecting rod 16 (specifically, the coupling portion between the piston pin 19 and the small end 16b of the connecting rod 16) by the rotation of the crank shaft 13.

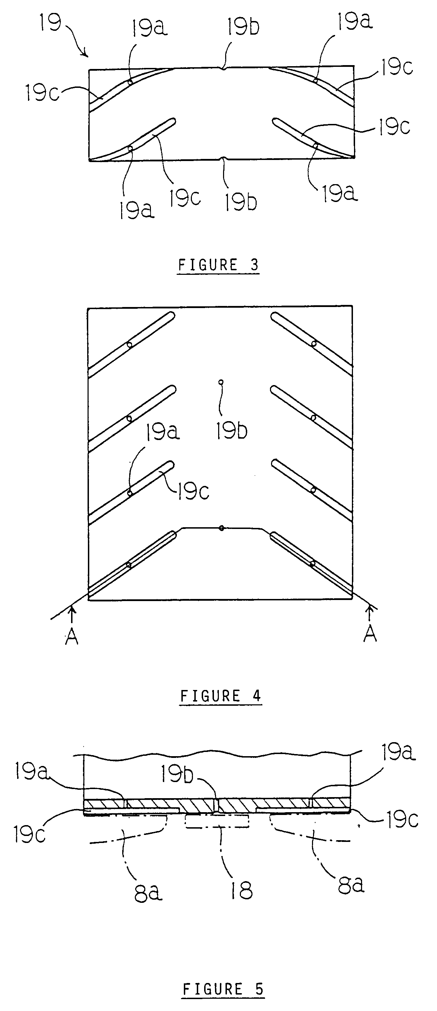

In Figs. 3 to 5, there is illustrated a detailed structure of the piston pin 19 used in the two-cycle engine 1 described in the above embodiment. Fig. 3 is a front elevation of the piston pin 19, viewed from the direction perpendicular to the axial direction of the piston pin 19; Fig. 4 is a development of an outer peripheral surface of the piston pin 19; and Fig. 5 is a cross section of the piston pin 19 taken along line A-A of Fig. 4.

As shown in Figs 3 to 5, the hollow cylindrical piston pin 19 is formed with an appropriate number of through-holes 19a communicating inner and outer peripheral surfaces of the piston pin 19 with each other, on its opposite end portions where the piston pin is brought into sliding contact with the inner peripheral surfaces of the pin bosses 8a defining the pin-bearing holes 8b (i.e., in the case of the present embodiment shown in the figures, four through-holes on each end portion are provided along the circumferential direction of the piston pin 19). Further, the piston pin 19 is formed with an appropriate number of through-holes 19b communicating the inner and outer peripheral surfaces of the piston pin 19 with each other, on its central portion where the piston pin 19 is brought into sliding contact with, the bearing 18 for the small end 16b of the connecting rod 16 (i.e., in the case of the present embodiment shown in the figures, two through-holes are provided along the circumferential direction of' the piston pin 19)

On the other peripheral surface of the opposite end portions of the piston pin 19, there are formed grooves 19c communicating with the respective through-holes 19a each provided in the region where the piston pin 19 is brought into sliding contact with the inner peripheral surface of the pin bosses 8a. As shown in Fig. 5, each of the grooves 19c extends over the outer peripheral surface of the piston pin 19 such that an inner end thereof is located at the portion between each pin boss 8a and the bearing 18 where the other peripheral surface of the piston pin 19 is exposed to the outside, thereby communicating the hollow interior of the piston pin 19 with an interior of the crank case 5 through the through-holes 19a and the grooves 19c.

In other words, the narrow grooves on the piston pin extend to an area of the piston pin which communicates freely, i.e. without any significant restriction to the flow of a pressure medium, with the outer surrounding.

As shown in figures 3, 4, 7 and 8, the grooves 19c are inclined with respect to the longitudinal axis of the piston pin.

Also, in the portion where the piston pin 19 is brought into sliding contact with the small end 16b of the connecting rod 16, the hollow interior of the piston pin 19 is communicated with the interior of the crank case 5 through the through-holes 19b and gaps between needles of the needle bearings 18.

In the two-cycle engine 1 according to the preferred embodiment of the present invention to which the piston pin leaving the above-mentioned structure is mounted, the operation of the engine 1 causes the piston 8 to be reciprocated up and down in the cylinder bore 9. In response to the reciprocating movement of the piston 8, the pressure within the crank case 5 (i.e., pressure of the crank chamber 10) is considerably fluctuated. On the other hand, the change in pressure of the hollow interior of the piston pin 19 is delayed as compared to that within the crank case 5, because the hollow interior of the piston pin 19 is closed outside its opposite ends by the inner peripheral surfaces defining the pin-bearing holes 8b and the inner peripheral surface 9a defining the cylinder bore 9. For this reason the change in pressure of the hollow interior of the piston pin 19 occurs mare slowly than that of the crank chamber 10, thereby causing difference in pressure between the hollow interior of the piston pin 19 and the interior of the crank case 5.

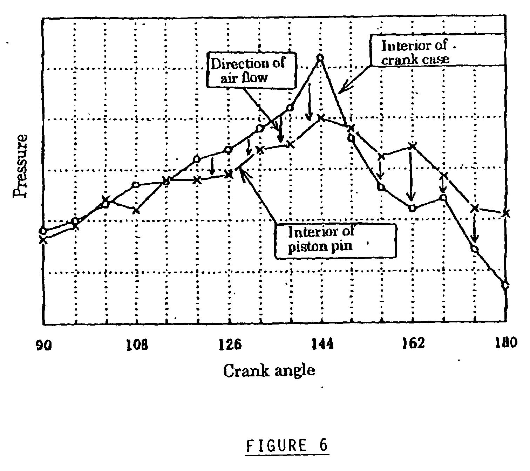

Accordingly, as shown in Fig. 6, when the piston 8 is in a down stroke, the interior of the crank case 5 (crank chamber 10) is compressed by the piston 8 so that the pressure within the crank case 5 increases, while the increase in pressure of the hollow interior of the cylindrical piston pin 19 is considerably delayed. As a result, at a crank angle of about 110 degrees or larger, the pressure within the crank case 5 is higher than that of the hollow interior of the piston pin 19. As the down movement of the piston 8 is further continued, the exhaust port 12 is opened into the combustion chamber 6 and successively the scavenging port 11a is opened to perform scavenging and exhausting operations. At this time, the pressure within the crank case 5 is decreased, while the decrease in pressure of the hollow interior of the piston pin 19 is delayed as compared to the pressure change within the crank case 5. As a result, at a crank angle of about 144 degrees or larger, the pressure of the hollow interior of the piston pin 19 becomes higher than the pressure within the crank case 5, thereby also causing the difference in pressure therebetween.

Accordingly, to eliminate the difference in pressure between the interior of the crank case 5 and the hollow interior of the piston pin 19, there occurs an air flow therebetween through the through-holes 19a and 19b penetrating a cylindrical wall of the piston pin 19. That is, a respiratory action between the interior of the crank case 5 and the hollow interior of the piston pin 19 is caused due to the air flow. More specifically, when the piston 8 is, for example, in an earlier stage of the down stroke, the lubricating oil mist scattered toward the lower surface of the piston 8 is sucked or absorbed into the grooves 19c or the gaps between needles of the needle bearing 18 and then introduced therefrom into the hollow interior of the piston pin 19, because the pressure within the crank case 5 is higher than the pressure of the hollow interior of the piston pin 19. Conversely, when the piston 8 is, for example, in a later stage of the down stroke, a reverse flow of the lubricating oil from the hollow interior of the piston pin 19 to the interior of the crank case 5 is caused, because the pressure within the crank case 5 is lower than the pressure of the hollow interior of the piston pin 19. As a result, the lubricating oil can be efficiently supplied to the coupling portion between the piston pin 19 and the connecting rod 16 to thereby lubricate the coupling portion in a satisfactory manner.

The diameter of the through holes 19a and 19b and the width of the grooves is designed such as to allow the afore-mentioned delay in the change of pressure inside the piston pin 19.

In the two-cycle engine 1 having the above-mentioned lubricating structure, the lubricating oil can be effectively fed to the sliding contact portions between the piston pin 19 and the pin bosses 8a or the bearing 18 for the small end 16b of the connecting rod 16 to lubricate these portions to a sufficient extent. Especially, since the grooves 19c formed on the outer peripheral surface of the piston pin 19 also serves as an oil sump, the sliding contact portions between the piston pin 19 and the pin bosses 8a which have been ordinarily considered to be difficult to lubricate, can be sufficiently lubricated.

In consequence, the amount of lubricating oil supplied to the crank case 5 is considerably decreased, thereby reducing the amount of the lubricating oil delivered from the crank case to the combustion chamber 6 correspondingly. Accordingly, white smoke due to combustion of excessive oil and unburned oil are prevented from being discharged into atmospheric air, thereby reducing the amount of the lubricating oil wasted or consumed to a large extent.

In the foregoing, the lubricating structure according to the present invention is described by way of one preferred embodiment in which the lubricating structure is applied to the two-cycle engine. However, it will be understood that various changes or modifications can be made to the above-mentioned preferred embodiment without departing the sprit and scope of the present invention. For example, specific designs or structures of the embodiment can be appropriately varied depending upon the aimed applications or requirements.

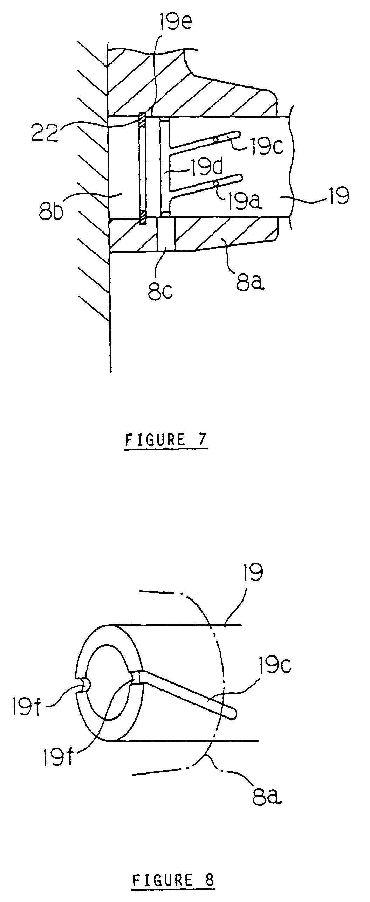

Next, the lubricating structure according to a second preferred embodiment of the present invention is explained below with reference to Fig. 7.

In the above-mentioned first preferred embodiment, the grooves 19c adapted for communicating the interior of the crank case 15 (crank chamber 10) with the hollow interior of the piston pin 19, are formed on the outer peripheral surface of the piston pin 19 at the sliding contact portions between the piston pin 19 and the pin bosses 8a. Further, the through-holes 19a communicating inner and outer peripheral surfaces of the piston pin 19 with each other are formed in the respective grooves 19c. Each of the grooves so formed as to extend from an outer end of the piston pin 19 toward a central portion thereof through the through-hole 19a.

On the other hand, in the second embodiment as shown in Fig. 7, the piston pin 19 is formed, at opposite end portions on an outer peripheral surface thereof, with annular grooves 19d which extend circumferentially at a location slightly spaced from an outer end of the piston pin 19 toward a central portion thereof. In addition, each of the annular grooves 19d is communicated with a plurality of grooves 19c extending therefrom toward the central portion of the piston pin 19 but within the sliding contact portion thereof with the inner peripheral surface of the pin boss 8a. Further, each groove 19c is communicated, on the side near the central portion of the piston pin 19, with a through-hole 19a which in turn is communicated with the hollow interior of the piston pin 19. Each of the pin bosses 8a is formed with a through-hole 8c at a position axially aligned with the annular groove 19d to establish the communication between the inner peripheral surface of the pin boss 8a (i.e., the pin-bearing hole 8b) and the interior of the crank case 15.

The cross-sectional area of the through hole 8c on the pin boss 8a is larger than the cross-sectional area of the groove 19c and of the through hole 19a of the piston pin and therefore does not impose any limitation on the flow of a pressure medium flowing therethrough.

By this arrangement the hollow interior of the piston pin 19 is communicated with the interior of the crank case 15 through the through-holes 19a, the grooves 19c and the annular grooves 19d formed in the piston pin 19, and through the through-holes 8c formed in the pin bosses 8a. The portion between the outer end and the annular groove 19d of the piston pin 19 is formed into a land 19e so that the outer peripheral surface of the piston pin 19 is brought into approximately close contact with the inner peripheral surface defining the pin-bearing hole 8b at that portion. Therefore, since the land 19e acts as a seal, any leak from the hollow interior of the piston pin 19 to the interior of the crank case 15 through the outer end of the piston pin 19, the annular groove 19d and the through-hole 8c, can be effectively avoided.

In accordance with the above-mentioned second preferred embodiment of the present invention, even though the end of each groove 19c is not exposed to the interior of the crank case 15, the difference in pressure between the hollow interior of the piston pin 19 and the interior of the crank case 15 can be ensured, whereby the respective sliding contact and bearing portions of the piston pin 19 can be effectively lubricated with the lubricating oil mist present in the crank case 15 in response to the pressure difference.

Next, the third preferred embodiment of the present invention is explained with reference to Fig. 8. In the third preferred embodiment, the piston pin 19 is formed, on opposite sides on the outer peripheral surface thereof, with a plurality of grooves 19c extending from each outer edge thereof to the region exposed to the interior of the crank case 15. Further, the piston pin 19 is formed on each annular end face thereof with cutouts 19f to establishing the communication between the hollow interior of the piston pin 19 and the respective grooves 19c.

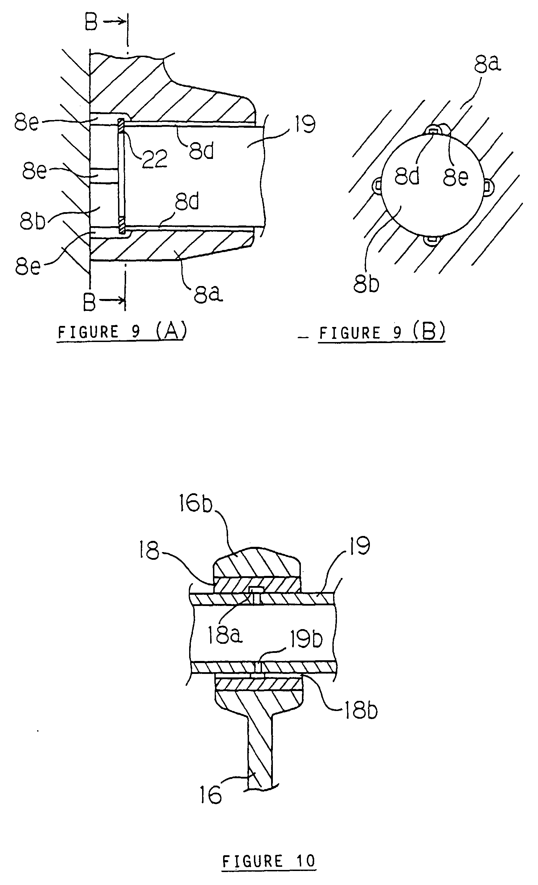

Next, the fourth preferred embodiment of the present invention is explained with reference to Fig. 9. In the fourth preferred embodiment, on the inner peripheral surfaces of the pin bosses 8a defining the pin-bearing holes 8b, there are formed a plurality of grooves 8d each extending from an inner edge of the pin-bearing hole 8b up to the position where the snap ring 22 for positioning the piston pin 19 is fitted. Further, a plurality of grooves 8e communicating with respective outer ends of the grooves 8d and extending in the longitudinal direction of the pin-bearing hole 8b up to nearly the outer edge thereof are formed on the inner peripheral surface defining the pin-bearing hole 8b so as to bypass the snap ring 22.

In accordance with any of the above-mentioned third and fourth preferred embodiments of the present invention, similarly to the preceding preferred embodiments, it is possible to lubricate the sliding contact and bearing portions with the lubricating oil mist present in the crank case 15.

Next, the fifth preferred embodiment of the present invention is explained with reference to Fig. 10.

With respect to the sliding contact portion between the piston pin 19 and the small end 16b of the connecting rod 16, in the first preferred embodiment, the small end 16b of the connecting rod 16 is rotatably fitted on the piston pin 19 through the needle bearing 18. Further, in the central portion of the piston pin 19 which is brought into sliding contact with the needle bearing 18, an appropriate number of through-holes 19b (in the illustrated embodiment, two through-holes are provided along a circumferential direction of the piston pin 19) are formed to communicate inner and outer peripheral surfaces of the piston pin 19.

On the other hand, in the fifth embodiment as illustrated in Fig. 10, as the bearing fitted between the piston pin 19 and the small end 16b of the connecting rod 16, a plain bearing 18 is used instead of the needle bearing. The plain bearing 18 has an annular groove 18a on an inner peripheral surface thereof at a position axially aligned with the through-holes 19b of the piston pin. The plain bearing 18 also has a longitudinally extending groove 18b traversing the annular groove 18a and communicating therewith.

In accordance with the fifth preferred embodiment, similarly to the preceding embodiments, since the respiratory action is caused due to the pressure difference between the hollow interior of the piston pin 19 and the interior of the crank case 15, the lubricating oil mist present in the crank case 15 is delivered through the through-holes 19b, the annular groove 18a and the longitudinally extending groove 18b, and vice versa, thereby effectively lubricating the sliding contact portion between the inner peripheral surface of the plain bearing 18 and the outer peripheral surface of the piston pin 19.

Meanwhile, in the above-mentioned preferred embodiments, all of the respective grooves 19c formed on the outer peripheral surface of the piston pin 19 as shown in Figs. 3, 7 and 8 and the longitudinally extending groove 18b as shown in Fig. 10, can be in the form of spiral grooves, whereby the piston pin 19 and the plain bearing 18 can satisfactorily withstand and absorb an explosion force and an inertia force of the piston 8 at portions other than these grooves.

The grooves 8d as shown in Fig. 9 which are formed on the inner peripheral surface of the pin boss 8a defining the pin-bearing hole 8b, may or may not be in the form of spiral grooves. However, if these grooves 8d are in the form of linear grooves, it is preferred that the grooves 8d are so formed as to extend in the direction other than the longitudinal direction of the connecting rod, because the explosion force and the inertia force of the piston 8 are severely exerted in such a direction.

Meanwhile, in the above-mentioned preferred embodiments, when the lubricating oil is fed to the respective engine portions to be lubricated, the lubricating oil from the oil pump 30 is distributed through the oil path 33 on the cylinder block side into the cylinder bore 9 near the combustion chamber 6, and through the oil path 34 on the crank case side to the bearing 17 for the large end 16a of the connecting rod 16. Further, as shown by a two dot chain line in Fig. 2, a part of the lubricating oil from the oil pump 30 can also be introduced into an oil injection pump 35. When the piston 8 is located near the bottom dead center, the lubricating oil can be directly injected at an appropriate timing into the hollow interior of the piston pin 19 through an oil nozzle 36 whose outlet is opened to the inner peripheral surface 9a defining the cylinder bore 9.

The above-mentioned direct oil injection ensures the supply of lubricating oil into the hollow interior of the piston pin 19. As a result, the lubricating oil can be flowed based on the respiratory action in response to the change in pressure difference between the interior of the crank case 15 and the hollow interior of the piston pin 19, and supplied to the sliding contact and bearing portions on the piston pin 19 and the bearing 18 for the small end 16b of the connecting rod 16, thereby enabling these portions to be effectively lubricated.

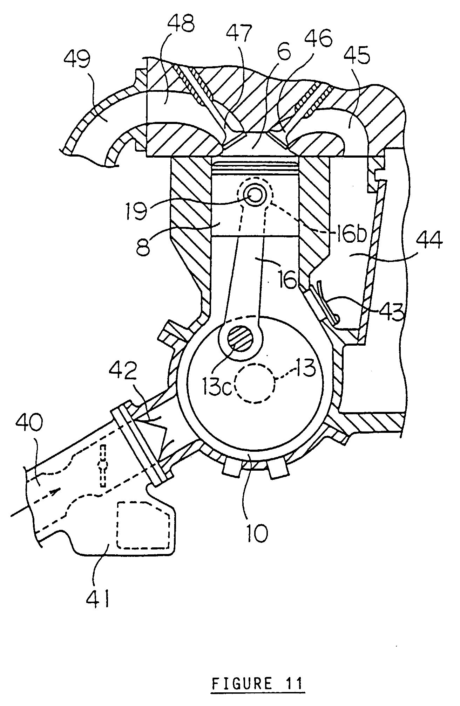

Further, the engine lubricating structure according to the present invention, can be applied not only to the two-cycle engines as described in the above preferred embodiments, but also to the crank chamber supercharging four-cycle engines, for example, those engines illustrated in Fig. 11. The crank chamber supercharging four-cycle engines are explained in more detail below with reference to Fig. 11. That is, the crank chamber supercharging engine includes an intake passage 40 having a carburetor 41 thereon. The intake passage 40 is connected to the crank chamber 10 through a check valve 42 for preventing a reverse air flow therethrough. Further, the crank chamber 10 is connected through a check valve 43 to a pressure-accumulating chamber 44 which is further communicated at the opposite end thereof with a intake port 45. A fresh intake air is introduced through the intake passage 40 into the crank case and supplied through the check valve 43 into the pressure-accumulating chamber 44 every revolution of the crank shaft 13. Further, the air is fed therefrom through the intake port 45 and an intake valve 6 into the combustion chamber 6 every revolution of the crank shaft 13. After the combustion stroke, the exhaust gas is discharged from an exhaust valve 47 through an exhaust port and an exhaust passage 49 into outside atmospheric air.

Moreover, engines to which the lubricating structure according to the present invention can be applied, are not limited to the above-mentioned two-cycle engines and crank chamber supercharging four-cycle engines in which the intake air is temporarily introduced into the crank case and then pressurized by the reciprocating movement of the piston to supply it into the combustion chamber through the intake port. The lubricating structure according to the present invention can also be applied to ordinary four-cycle engines to effectively lubricate sliding contact portions between the piston pin and the pin bosses, which portions have been conventionally difficult to lubricate.

As described above, in the engine lubricating structure according to the present invention, with an extremely simply structure of the piston pin, the lubricating oil can be efficiently supplied to the coupling portion between the piston pin and the connecting rod by using the respiratory action between the hollow interior of the piston pin and the interior of the crank case without introducing a large amount of oil into the crank case, thereby enabling the coupling portion to be effectively lubricated.

In addition, in the case where the lubricating structure according to the present invention is applied to two-cycle engines, white smoke due to the combustion of excessive oil and unburned oil can be prevented from being discharged into atmospheric air, thereby reducing the amount of the lubricating oil consumed or wasted to a large extent.

## Claims

1. Bearing arrangement for a piston pin (19) of a piston (8) of an internal combustion engine (1), said bearing arrangement comprising a hollow piston pin (19) and a pin bearing hole (8b,18) provided on the piston (8) or a connecting rod (16), for engagement with said piston pin (19),
said piston pin (19) and said pin bearing hole (8b,18) each having a bearing surface for sliding contact with each other,
wherein at least one opening (19a,19f) is provided in the piston pin for communicating the interior of the piston pin with its bearing surface, and
wherein at least one groove (19c) is provided on at least one of said bearing surfaces which groove connects said opening (19a,19f) with the outer surrounding to allow aspiration between the hollow interior of the piston pin (19) with the outer surrounding.

2. Bearing arrangement according to claim 1, **characterized in that** said at least one groove (19c) is inclined with respect to a longitudinal axis of the piston pin (19).

3. Bearing arrangement according to claim 1 or 2, **characterized in that** said at least one opening on the piston pin (19) comprises one or more through-holes (19c) communicating inner and outer peripheral surfaces of the piston pin (19) with each other, said openings (19c) are provided between said bearing surfaces.

4. Bearing arrangement according to claim 3, **characterized in that** said grooves (19c) extend from a longitudinal end of the piston pin (19) to a center portion of said piston pin so as to pass the through-hole (19a).

5. Bearing arrangement according to one of claims 1 to 3, **characterized in that** it comprises a pin boss (8a) provided on said piston (8), said pin boss (8a) having said pin bearing hole (8b), wherein the pin boss (8) is formed with at least one through hole (8c), said through hole (8c) being arranged so as to connect said groove (19c) with the outer surrounding.

6. Bearing arrangement according to one of claims 1 to 5, **characterized in that** said at least one opening on the piston pin (19) is formed by a recess (19f) provided on an end face of the piston pin.

7. Bearing arrangement according to one of claims 1 to 6, **characterized in that** grooves provided on the bearing surface of the pin bearing hole (8b,18) each extend outwardly from an inner edge of the pin bearing hole beyond a position which is adapted to fix the piston pin (19) in its position.

8. Bearing arrangement according to one of claims 1 to 7, **characterized in that** the bearing surface of the pin bearing hole is provided by an inner peripheral surface of a plain bearing, said plain bearing (18) being formed at its inner peripheral surface with one or more grooves (18b) which connect at least one through opening (19b) provided on the corresponding bearing surface of the piston pin (19) with the outer surrounding.

9. A lubricating structure for an internal combustion engine (1) including a cylinder block (4) defining a cylinder bore (9), a crankcase (5) integrally connected with the cylinder block (4), a piston (8) slidably fitted into the cylinder bore, a bearing arrangement according to one of claims 1 to 8 provided at a lower surface side of the piston (8), a crankshaft (13) rotatably supported in the crankcase, and a connecting rod (16) coupled at one end thereof with a central portion of the piston pin (19) and at the other end thereof with the crankshaft (13) for enabling an associated operation between the piston (8) and the crankshaft (13).

10. Lubricating structure according to claim 9, **characterized in that** means (35,36) are provided to directly supply lubricating oil to the hollow interior of the piston pin (19) through an oil path opening to the inner peripheral surface of the cylinder bore. 11. Lubricating structure for an internal combustion engine including a cylinder block (4) defining a cylinder bore (9), a crankcase (5) integrally connected with the cylinder block (4), a piston (8) slidably fitted into the cylinder bore and having a pair of pin bearing holes (8b) formed on a lower surface side thereof, a cylindrical piston pin (19) supported at opposite ends thereof in the pin bearing hole (8b), a crankshaft (13) rotatably supported in the crankcase, and a connecting rod (16) coupled at one end thereof with a central portion of the piston pin (19) through a bearing and at the other end thereof with the crankshaft (13) for ensuring an associated operation between the piston and the crankshaft, wherein the piston pin (19) is formed with one or more through-holes (19b) at a portion where the piston pin (19) is brought into sliding contact with the small end (16b) of the connecting rod through the bearing (18) to communicate inner and outer peripheral surfaces of the piston pin with each other.
